# EUROPEAN PATENT SPECIFICATION

(11) **EP 3 744 952 B1**
(45) Date of publication and mention of the grant of the patent: **14.12.2022**
(21) Application number: 19177692.1
(22) Date of filing: 31.05.2019
(51) Int. Cl.: F16K 11/20, F16K 27/02, F01D 17/18, F01D 25/24

(54) **CASING ARRANGEMENT FOR FLUID POWER EQUIPMENT**
GEHÄUSEANORDNUNG FÜR FLUIDTECHNISCHE AUSRÜSTUNG
AGENCEMENT DE BOÎTIER POUR ÉQUIPEMENT D'ALIMENTATION DE FLUIDE

(43) Date of publication of application: 02.12.2020
(73) Proprietor: Siemens Energy Global GmbH & Co. KG, 81739 München (DE)
(72) Inventor: Bamrah, Devinder Singh, 390024 Vadodara, Gujarath (IN); Kakar, Sukesh, 121004 Faridabad (IN); Kumar, Gaurav, 110070 New Delhi (IN); Paul, Sayantan, 110075 New Delhi, (IN); Shukla, Nidhi, 208017 Kanpur (IN); Singh, Paramdeep, 110058 Delhi (IN)
(74) Representative: Patentanwaltskanzlei WILHELM & BECK

(56) References cited:
- DE-A1- 4 425 352
- DE-C1- 19 708 273
- US-A1- 2015 252 681
- US-B1- 6 302 644

## Description

The present invention relates to a casing arrangement for a steam turbine. More particularly the present invention relates to a customizable casing arrangement customized for accommodating a governing valve or control valve of either single valve design or multi-valve design into the fluid power equipment, which control flow of the fluid, such as, steam into the steam turbine.

Fluid power equipment, such as, steam turbines employed in industrial setups typically, employ valve arrangements, in order to regulate flow of steam according to load changes or to stop the flow of steam altogether. Such valve arrangements typically constitute arrangements controlling an inlet of the industrial steam via a single governing valve or a series of governing valves working in concert also known as multi-valve arrangements. Based on the valve arrangement and an inlet size of a steam turbine, the casing designs vary. For example, up to four variants may have to be designed. This leads to a longer delivery time, a higher inventory cost, a higher pattern cost, and an increased engineering effort.

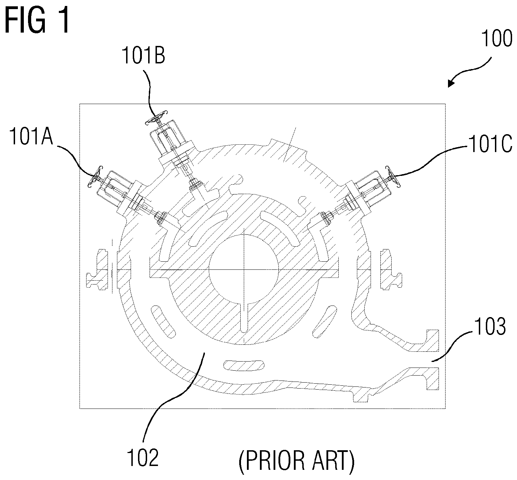

FIG 1 illustrates a sectional view of a single valve arrangement 100 of a steam turbine, of the state of the art, as mentioned above. The single valve arrangement 100 of the state of the art, is bulkier compared to a multi-valve arrangement, as it requires additional space to accumulate volumetric flow of the steam required by the turbine. The single valve arrangement 100 comprises valves 101A, 101B, and 101C operated manually or pneumatically to manage different load points by controlling an amount of steam flow through an inner chamber 102. Moreover, in a single valve arrangement 100, the steam inlet flow 103 has to be maintained from one side only, for example, right hand side. This single valve arrangement 100 suits the customers who generally have a fixed direction of steam inflow. However, this single valve arrangement 100 poses limitations for those customers who need flexibility in the design due to the steam inlet being in the opposite direction to that of the inlet flow 103 of the single vale arrangement 100 of the state of the art. This leads to unnecessary loss of customer orders.

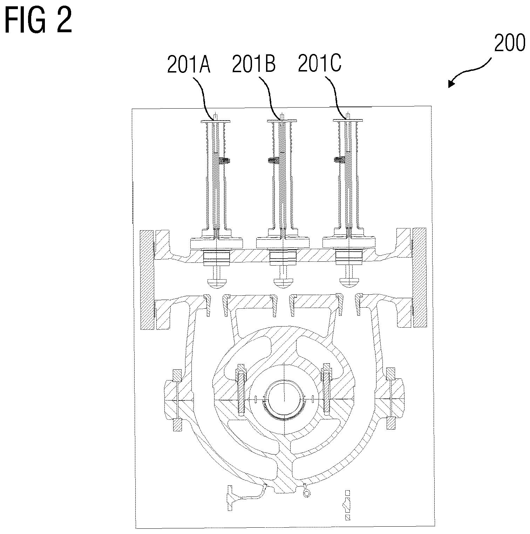

FIG 2 illustrates a sectional view of a multi vale arrangement 200 of a steam turbine, of the state of the art. The multi-valve arrangement comprises valves 201A-201C operated in concert with one another to control steam inlet flow in the steam turbine. According to the load control requirements of a customer, a single valve arrangement shown in FIG 1 or a multi-valve arrangement shown in FIG 2 is configured in a steam turbine.

At present, original equipment manufacturers (OEMs) do not maintain a significant inventory due to high number of variants required in the casing design. Typically, inlet casings of either single valve or multi-valve are procured as per order entry, from vendors, and then machined in-house or sourced back to vendors depending on factory loading. Typically, a single valve arrangement is required for mechanical drive applications whereas a multi-valve arrangement is required for turbogenerator set applications. Additionally, a single valve arrangement is also preferred by customers in low capital investment market where customers prefer to run the turbine on single load-point for most parts of the season and will use the hand-valves when an increased power demand is there for short term durations during the season. As inlet casings are one of the longest lead items in an order, their sourcing and machining results in an increase in overall delivery time of the turbine.

Document US 6 302 644 B1 describes in figs. 1 and 2 a casing 1 for a steam turbine as a fluid power equipment. The steam turbine in fig. 1 has a control stage and the steam turbine in fig. 2 has no control stage and has a different interior design of the casing. The casing 1 comprises chambers 15, 16, capable of controlling a fluid flowing through the steam turbine in communication with a valve arrangement 7. In fig. 1 the chambers 15 and 16 are separated by two intermediate walls 17, 18 in such a way that the chamber 15 forms a larger sector and therefore a larger passage area for the fresh steam than the chamber 16. Control valve 8 opens into the chamber 15 and control valve 9 into the chamber 16. The intermediate walls are removed in fig. 2 and there is only one chamber 19 left to which the steam is fed via both valves 8, 9.

Document US 2015/0252681 A1 describes a modular steam turbine casing with an inner shell 110, comprising at least two chambers 130, 155. There are elements 175, 176 or 180 which can be machined to alter the number of chambers.

Document DE 44 25 352 A1 describes a steam turbine casing 1a, 1b with a plurality of chambers 3a, 3b, wherein according to requirements wall elements 4 may be removed.

Document DE 197 08 273 C1 describes a steam turbine casing 1 with a plurality of chambers 12, 15. There is also mentioned an intermediate wall 17, which is machinable in accordance with respective requirements for steam injection ZD or extraction AD, so that the number of chambers 12, 15 is altered.

Therefore, it is an object of the present invention to provide a casing arrangement to be employed, for example, in a fluid power equipment of the aforementioned kind, wherein the casing arrangement is simple in design, is cost effective, and is able to accommodate different variants of the valve arrangements including single valve and multi-valve arrangements with minimal alterations.

The casing arrangement disclosed in the present invention achieves the aforementioned object, in that the casing arrangement provides for one or more elements to be machined out easily based on valve arrangement configuration requirements.

Disclosed herein is a casing for a steam turbine, according to claim 1, to control flow of fluid into the steam turbine. As used herein, "fluid power equipment" refers to a steam turbine. The term "casing" refers to an enclosure capable of housing rotors, blades there-within and controlling flow of the fluid in the fluid power equipment.

The casing disclosed herein comprises chambers within the casing, capable of controlling a fluid flowing through the fluid power equipment in communication with a valve arrangement, typically referred to as valve-chest. As used herein, "valve arrangement" refers to control valve arrangement controlling flow of the fluid through the steam turbine. According to one aspect, which is not claimed, the valve arrangement is a single valve arrangement having up to three hand valves and a governing valve or a control valve. The governing valve or the control valve is actuator driven and each of the hand valves are operated manually, to control load points in a steam turbine, that is, flow of the steam. According to another aspect, which is not claimed, the valve arrangement is a multi-valve arrangement having up to three valves that are operated in concert to control load points in a steam turbine, that is, flow of the steam and are controlled by actuators. Advantageously, there are at least five chambers available in the casing. There may be more than five chambers based on customization requirements to be made. The casing also includes machineable elements which when selectively machined from the casing alter a number of the chambers there-within resulting in multiple chamber arrangements thereby, allowing multiple solutions, that is, multiple valve arrangements to be adapted to, with flexibility. As used herein, the term "machineable" refers to an arrangement permitting removal of a material, for example, cutting of a metal. Also used herein, "elements" refer to one or more parts of the casing. According to one aspect of the present invention, the elements comprise, for example, walls such as inner walls, outer walls, partitioning walls that form chambers within the casing. According to another aspect, which is not claimed, the elements also include physical dimensions of the walls such as a thickness of a wall, a height of the wall, etc. According to yet another aspect, which is not claimed, the elements also include holes punched through the walls of the casing for establishing fluid communication between a space enclosed within a chamber of the casing and a space outside the chamber, that is, in the remainder of the casing in a downstream direction of the fluid flow. The machineable walls when machined increase or decrease the number of chambers within the casing. Advantageously, the machineable elements are selectively machined from the casing based on a valve arrangement to be accommodated in the fluid power equipment, based on application requirements. Advantageously, the number of chambers can vary from about three to at least five depending on the amount of flow which needs to be admitted in the turbine or the type of valve control required. For example, when four valves including three hand valves and a governing valve of a single valve arrangement is to be accommodated in the fluid power equipment, the machineable elements are machined so as to form four chambers. Similarly, when three valves of a multi-valve arrangement are to be accommodated in the fluid power equipment, the machineable elements are machined so as to form three chambers in the casing. Similarly, in cases of a low steam volume requirement, only an upper half of the casing can be used. In this scenario, the casing has six chambers by default. Without machining any machineable elements, the casing's upper half can be used for a single valve arrangement having four valves. With machining only one of the machineable elements, the casing's upper half can be used for a multi-valve arrangement having three valves. Thus, the casing is configurable to suit multiple load point requirements of a fluid power equipment.

According to one aspect, which is not claimed, the casing provided contains at least one hole and at least five chambers. The chambers are configured to be reduced in number by machining one or more elements of the casing thereby, combining the chambers, based on the valve arrangement to be accommodated in the fluid power equipment.

Advantageously, based on the number of chambers formed post machining of the elements, holes are machined, that is, punched through a top wall of the casing such that the total number of holes is equal to the number of valves for the valve arrangement being accommodated. The valves are then assembled through these holes.

Advantageously, one or more physical dimensions of the machineable elements of the casing are configured based on one or more fluid dynamics parameters associated with a fluid used in the fluid power equipment. The fluid dynamics parameters comprise, for example, a pressure of the fluid, a velocity of the fluid, a temperature of the fluid, a volumetric flow of the fluid, etc.

Typically, steam in the chambers that are in fluid communication with the valve arrangement, designated as valve-chest, will be used to feed the steam in the downstream section of the casing through a control section, for example, a nozzle-plate. An amount of steam to be admitted in a turbine is an outcome of a thermodynamic behavior of the turbine which is governed by steam characteristics comprising, for example, a steam velocity, a steam pressure, a steam temperature, etc. According to yet another aspect, which is not claimed, the casing disclosed herein allows accommodation of nozzles in the nozzle-plate to be positioned anywhere along a diameter of the chambers in the valve-chest. Advantageously, the design of the casing with its chambers and flexible control section geometry achieved via the nozzle plate positioning provides freedom of configuring an optimized turbine using a single common casing and eliminating the need to have separate variants to handle different thermodynamic load cases based on application requirements.

The casing disclosed herein comprises an inflow member in fluid communication with one or more of the chambers and configurable to receive a fluid inflow into the casing. Advantageously, the inflow member is positioned so as to lead the fluid inflow into the chamber stretching across upper and lower halves of the casing. Advantageously, the casing disclosed herein is configurable to receive fluid inflow at least from each of opposing sides of the casing thereby, being effectively suited for a variety of customer requirements and installations. The casing when configured for a single valve arrangement can receive steam inlet flow from a bottom right side of the casing via the inflow member, a top right side of the casing, or a top left side of the casing. The casing when configured for a multi-valve arrangement can receive steam inlet flow from a top right side of the casing or a top left side of the casing.

Thus, the casing disclosed herein enables significant reduction in inventory management time and effort because by procuring a single casing the requirements of single and multi-valve arrangements can be easily accommodated. This also leads to reduction in overall turbine costs and delivery time required per order. Moreover, flexibility of incorporating steam inlet entry for single valve arrangement from top left, from top right, or from bottom left increases customer base that can be catered to with minimal changes in the casing.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a sectional view of a single valve arrangement of a steam turbine, of the state of the art.
- FIG 2: illustrates a sectional view of a multi vale arrangement of a steam turbine, of the state of the art.
- FIGS 3A-3C: illustrate sectional perspective views of a casing having machineable walls, according to an embodiment of the present invention.
- FIG 4: illustrates a sectional elevation view of the casing shown in FIG 3B accommodating a single valve arrangement, according to an embodiment of the present invention.
- FIG 5: illustrates a sectional elevation view of the casing shown in FIG 3C accommodating a multi-valve arrangement, according to an embodiment of the present invention.
- FIG 6A-6E: illustrate various steam inlet flow arrangements achieved using the casing shown in FIGS 3A-3C.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

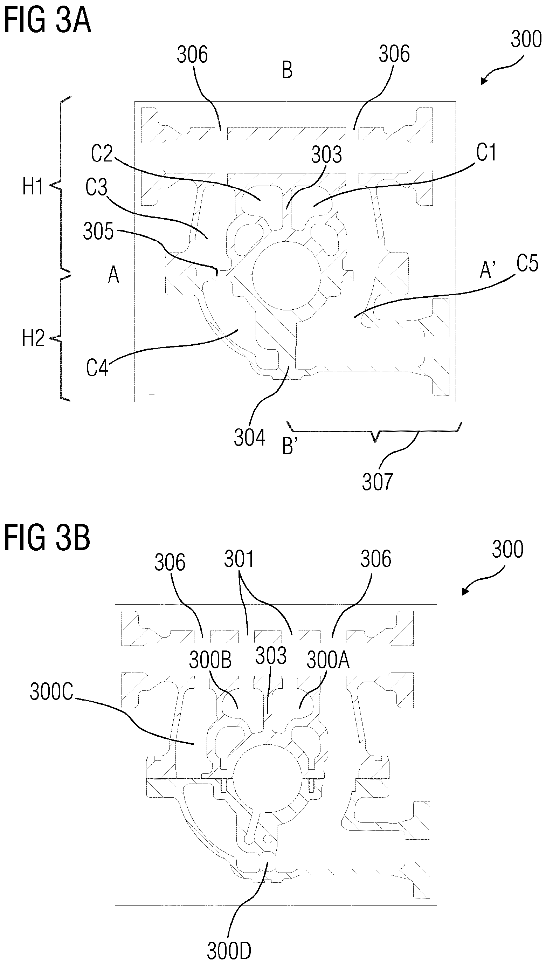

FIGS 3A-3C illustrate sectional perspective views of a casing 300 having machineable walls 303 and 304, according to an embodiment of the present invention.

FIG 3A illustrates a casing 300 configurable based on a single or a multi-valve arrangement to be accommodated in a fluid power equipment for which the casing is to be used. The casing 300 is provided by default and comprises about five chambers C1-C5. The chambers C1-C5 are configured to be reduced in number by machining one or more walls 303, 304, 305, etc., along orthogonal axes A-A' and B-B' passing centrally through the casing 300 thereby, combining one or more of the chambers C1-C5, based on the valve arrangement to be accommodated. The chambers C1 and C2 have a machineable wall 303 there-between. The chambers C3 and C4 have a machineable wall 305 there-between. The chambers C4 and C5 have a machineable wall 304 there-between. The chambers C1, C2, and C3 are positioned entirely in an upper half H1 of the casing 300. The chamber C4 is positioned entirely in a lower half H2 of the casing 300. The chamber C5 is positioned so as to stretch through the upper half H1 and the lower half H2 of the casing 300. The casing 300 may also have one or more holes 306 by default providing a fluid communication passage into the chambers C3 and/or C5. The casing 300 comprises an inflow member 307 in fluid communication with the chamber C5. The inflow member 307 is positioned in the lower half H2 to allow fluid inlet from bottom right of the casing 300.

Alternatively, the casing 300 may comprise a sixth chamber C6 (not shown) formed by splitting the chamber C5 into two chambers by having a machineable wall (not shown) positioned along the horizontal axis A-A' corresponding to the position of the machineable wall 305. This arrangement allows the casing 300 to suit applications having a requirement for a low steam volume wherein, the chambers C1, C2, C3, and the sixth chamber (not shown) formed by splitting the chamber C5, that are lying in the upper half H1 of the casing 300 are put to use. The lower half H2 of the casing 300 remains unused. In this arrangement, the machineable wall 303 can be machined from the casing 300 based on the valve arrangement to be accommodated.

FIG 3B illustrates a casing 300 configured to accommodate a single valve arrangement. Therefore, the wall 304 shown in FIG 3A is machined out from the casing 300 thereby, creating chambers 300A, 300B, 300C, and 300D in the casing 300. The chambers 300A, 300B, and 300C each accommodate a hand valve of the single valve arrangement therein for controlling the load points during operation of a steam turbine in which the casing 300 is to be used. The chamber 300D accommodates a governing valve (not shown) therein inserted into the casing 300 which is mounted at an inlet flange (not shown) of the casing 300. One of the hand valves is inserted through the other hole 306 so as to be in fluid communication with the chamber 300C. Additional holes 301 are also machined from the casing 300 through which the hand valves are then inserted and installed in the casing 300 so as to be in fluid communication with the chambers 300A and 300B.

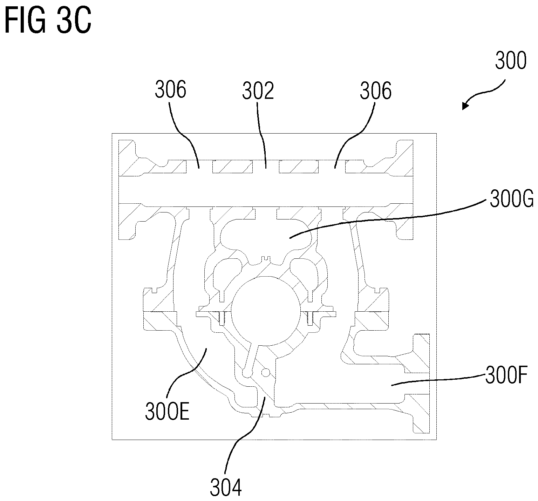

FIG 3C illustrates a casing 300 configured to accommodate a multi-valve arrangement. Therefore, the walls 303 and 305 are machined out from the casing 300 thereby creating chambers 300E, 300F, and 300G in the casing 300. The chambers 300E, 300F, and 300G each accommodate a valve of the multi-valve arrangement therein for controlling the load points during operation of a steam turbine in which the casing 300 is to be used. A first valve and a third valve of the multi-valve arrangement are inserted into the casing 300 through holes 306 so as to be in fluid communication with the chambers 300E and 300F respectively. A hole 302 is machined from the casing 300 so as to provide fluid communication between a second valve of the multi-valve arrangement and the chamber 300G.

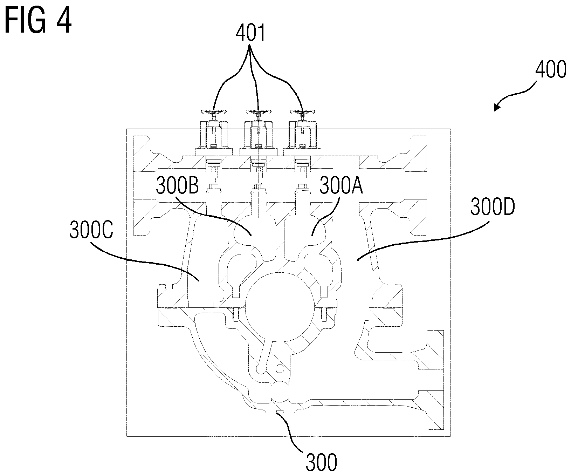

FIG 4 illustrates a sectional elevation view of the casing 300 shown in FIG 3B accommodating a single valve arrangement 400, according to an embodiment of the present invention. The casing 300 post machining has chambers 300A, 300B, 300C, and 300D. The hand valves 401 of the single valve arrangement 400 are each in fluid communication with the space defined by inner walls of the chambers 300A, 300B, and 300C respectively. Similarly, a governing valve (not shown) is in fluid communication with the space defined by inner walls of the chamber 300D.

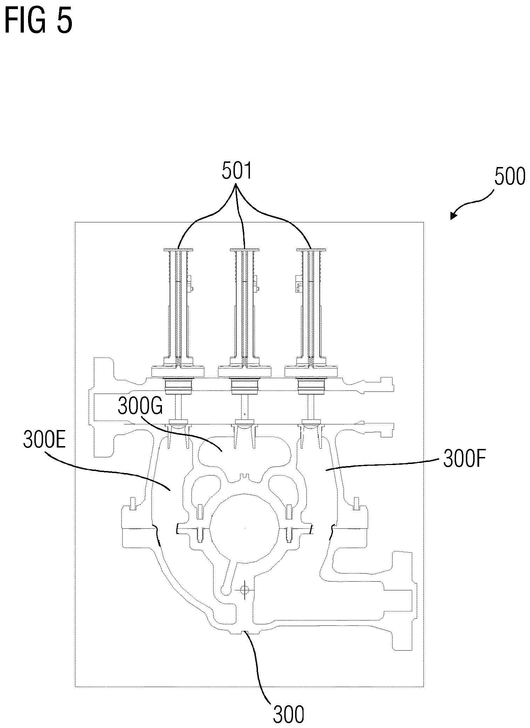

FIG 5 illustrates a sectional elevation view of the casing 300 shown in FIG 3C accommodating a multi-valve arrangement 500, according to an embodiment of the present invention. The casing 300 post machining has chambers 300E, 300F, and 300G. The valves 501 of the multi-valve arrangement 500 are each in fluid communication with the space defined by inner walls of the chambers 300E, 300F, and 300G respectively.

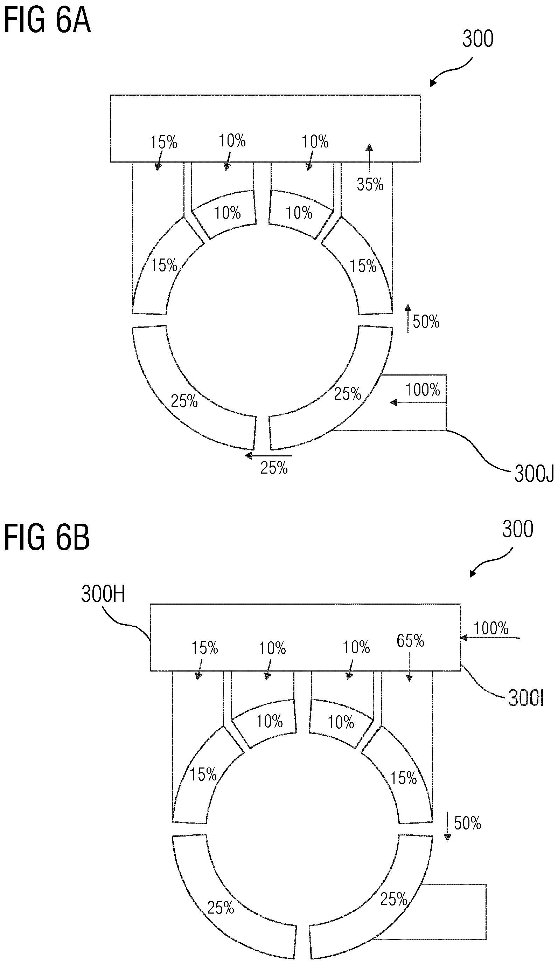

FIG 6A-6E illustrate various steam inlet flow arrangements achieved using the casing 300 shown in FIGS 3A-3C. FIGS 6A-6D illustrate the casing 300 machined to suit a single valve arrangement 400 shown in FIG 4.

As shown in FIG 6A, the casing 300 allows entry of the steam from bottom right side 300J of the casing 300 allowing about 65% of the steam in the chamber 300D, 10% of the steam in each of the chambers 300A and 300B shown in FIG 3B, and 15% of the steam in the chamber 300C shown in FIG 3B upon operation of the hand valves 401 shown in FIG 4.

As shown in FIG 6B, the casing 300 allows entry of the steam from top right side 3001 of the casing 300 allowing about 65% of the steam in the chamber 300D, 10% of the steam in each of the chambers 300A and 300B, and 15% of the steam in the chamber 300C upon operation of the hand valves 401.

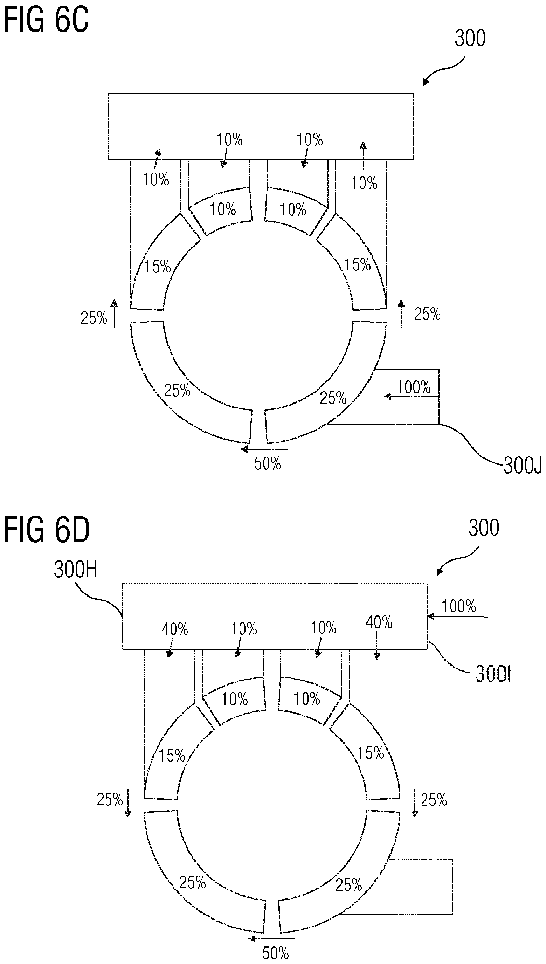

As shown in FIG 6C, the casing 300 is machined so as to allow entry of the steam from bottom right side 300J of the casing 300 thereby, allowing 100% steam to enter into the chamber 300D further being split into about 50% in each of the two halves within the chamber 300D i.e. upper half and lower half. Out of which, 10% of the steam enters the chamber 300B from the chamber 300C which is in communication with the chamber 300D through hand-valve 401. Also, 10% of the steam enters the chamber 300A upon operation of the hand valves 401. In this arrangement, one or more machineable elements, such as the machineable walls 304 and 305, of the casing 300 between the chambers 300D and 300C are machined to allow the chambers 300D and 300C to be in fluid communication with one another. Advantageously, for this embodiment of the casing 300 shown in FIG 6C, the single valve arrangement 400 works with three chambers 300A, 300B, and the chamber formed by combining the chambers 300C and 300D.

As shown in FIG 6D, the casing 300 is machined so as to allow entry of the steam from top right side 3001 of the casing 300 thereby, allowing 40% of the steam to enter into the chamber 300D, 10% of the steam into the chamber 300A, 10% of the steam into the chamber 300B, and 40% of the steam into chamber 300C upon operation of the hand valves 401. In this arrangement, one or more machineable elements of the casing 300 between the chambers 300D and 300C are machined so as to allow approximately equal area within the chambers 300C and 300D.

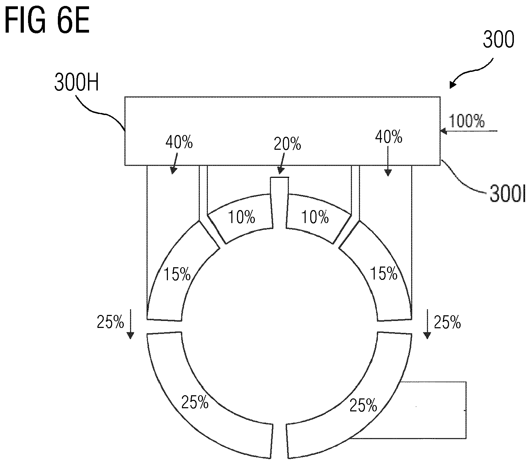

FIGS 6E illustrates the casing 300 machined to suit a multi-valve arrangement 500 shown in FIG 5. As shown in FIG 6E, the casing 300 is machined so as to allow entry of the steam from top right side 3001 of the casing 300 allowing 40% of the steam to flow into the chamber 300F, 20% of the steam to flow into the chamber 300G and 40% of the steam to flow into the chamber 300E upon operation of the valves 501.

The casing 300 shown in FIGS 6A-6E can be machined to accept the steam flow entry thorough the top left side 300H of the casing 300 for both single valve arrangement 400 as well as multi-valve arrangement 500.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope of the invention in its aspects.

### List of reference numerals

100 single valve arrangement of state of art
101A, 101B, 101C valves of the single valve arrangement of state of art
102 inner chamber
103 fluid/steam inlet flow
200 multi valve arrangement of state of art
201A, 201B, 201C valves of the multi valve arrangement of state of art
300 casing
300A-300G chambers
300A-300D chambers for accommodating single valve arrangement
300E-300G chambers for accommodating multi valve arrangement
300H top left side of the casing
3001 top right side of the casing
300J bottom right side of the casing
301, 302, 306 holes
303, 304, 305 machineable walls
307 inflow member at bottom right side of the casing
A - A' and B - B' orthogonal axes centrally passing through casing
C1-C5 chambers provided by default
H1 upper half of the casing
H2 lower half of the casing
400 single valve arrangement
401 valves
500 multi valve arrangement
501 valves

## Claims

1. A casing (300) for a steam turbine, the casing (300) comprising:
- a plurality of chambers (C1-C5) inside the casing (300) capable of controlling a fluid flowing through the steam turbine in communication with a valve arrangement (400, 500); and **characterized by**:
- machineable elements (301, 302, 303, 304, 305) configured to be removed, for enabling the accommodation of single valve (400) and multi-valve arrangements (500), said machineable elements (301, 302, 303, 304, 305) when selectively machined from the casing (300) decrease the number of the plurality of chambers (C1-C6) inside said casing (300),
wherein after removing the machinable elements(301, 302, 303, 304, 305), the plurality of chambers (C1-C5) each accommodate a valve of the single valve (400) or multi-valve arrangement (500) for controlling the load points during operation of the steam turbine.

2. The casing (300) according to the claim 1, wherein the one or more of the machineable elements (301, 302, 303, 304, 305) are selectively machined from the casing (300) based on the single valve (400) and multi-valve arrangement (500) to be accommodated in the steam turbine.

3. The casing (300) according to any one the previous claims, wherein one or more physical dimensions of the machineable elements (301, 302, 303, 304, 305) are configured based on one or more fluid dynamics parameters associated with a fluid used in the steam turbine,
wherein the one or more fluid dynamics parameters is one of the following: a pressure of the fluid, a velocity of the fluid, a temperature of the fluid, a volumetric flow of the fluid.

4. The casing (300) according to any one of the previous claims, configured to receive fluid inflow at least from each of opposing sides (300H, 3001) of the casing (300), wherein the opposing sides (300H, 3001) of the casing (300) are a top left side of the casing (300H) and a top right side of the casing (300I).

5. The casing (300) according to any one of the previous claims, comprising an inflow member (307) in fluid communication with one or more of the chambers (C1-C5) and configured to receive a fluid inflow into the casing (300).

## Patentansprüche

1. Gehäuse (300) für eine Dampfturbine, wobei das Gehäuse (300) umfasst:
- mehrere Kammern (C1-C5) im Inneren des Gehäuses (300), die dazu tauglich sind, ein Fluid, das durch die Dampfturbine strömt, zu steuern, und in Verbindung mit einer Ventilanordnung (400, 500) stehen; und **gekennzeichnet durch**:
- zerspanbare Elemente (301, 302, 303, 304, 305), die dazu ausgestaltet sind, entfernt zu werden, um die Aufnahme von Einzelventil- (400) und Mehrventilanordnungen (500) zu ermöglichen, wobei die zerspanbaren Elemente (301, 302, 303, 304, 305), wenn sie selektiv aus dem Gehäuse (300) herausgespant werden, die Anzahl der mehreren Kammern (C1-C6) im Inneren des Gehäuses (300) verringern,
wobei nach dem Entfernen der zerspanbaren Elemente (301, 302, 303, 304, 305) die mehreren Kammern (C1-C5) jeweils ein Ventil der Einzelventil- (400) oder Mehrventilanordnung (500) zum Steuern der Lastpunkte während des Betriebs der Dampfturbine aufnehmen.

2. Gehäuse (300) nach Anspruch 1, wobei das eine oder die mehreren zerspanbaren Element(e) (301, 302, 303, 304, 305) basierend auf der Einzelventil- (400) und Mehrventilanordnung (500), die in der Dampfturbine aufgenommen werden sollen, selektiv aus dem Gehäuse (300) herausgespant wird/werden.

3. Gehäuse (300) nach einem der vorangehenden Ansprüche, wobei eine oder mehrere Abmessungen der zerspanbaren Elemente (301, 302, 303, 304, 305) basierend auf einem oder mehreren Fluiddynamikparametern, der/die einem in der Dampfturbine verwendeten Fluid zugeordnet ist/sind, ausgestaltet ist/sind, wobei der eine oder die mehreren Fluiddynamikparameter eines der Folgenden ist/sind: ein Druck des Fluids, eine Geschwindigkeit des Fluids, eine Temperatur des Fluids, ein Volumendurchfluss des Fluids.

4. Gehäuse (300) nach einem der vorangehenden Ansprüche, das dazu ausgestaltet ist, einen Fluideinstrom wenigstens von jeder gegenüberliegender Seiten (300H, 300I) des Gehäuses (300) zu empfangen, wobei die gegenüberliegenden Seiten (300H, 300I) des Gehäuses (300) eine obere linke Seite des Gehäuses (300H) und eine obere rechte Seite des Gehäuses (300I) sind.

5. Gehäuse (300) nach einem der vorangehenden Ansprüche, das ein Einstromelement (307) umfasst, das in Fluidverbindung mit einer oder mehreren der Kammern (C1-C5) steht und dazu ausgestaltet ist, einen Fluideinstrom in das Gehäuse (300) zu empfangen.

## Revendications

1. Carter (300) pour une turbine à vapeur, le carter (300) comprenant :
- une pluralité de chambres (C1 à C5) à l'intérieur du carter (300) aptes à réguler un écoulement de fluide à travers la turbine à vapeur communiquant avec un système de vannes (400, 500) ; et **caractérisé par** :
- des éléments usinables (301, 302, 303, 304, 305) conçus pour être retirés, de façon à permettre la mise en place de systèmes à vanne individuelle (400) ou à vannes multiples (500), lesdits éléments usinables (301, 302, 303, 304, 305) réduisant le nombre de la pluralité de chambres (C1 à C6) à l'intérieur du carter (300) lorsqu'ils sont sélectivement retirés dudit carter (300) par usinage,
dans lequel, après le retrait des éléments usinables (301, 302, 303, 304, 305), la pluralité de chambres (C1 à C5) comportent chacune une vanne du système à vanne individuelle (400) ou à vannes multiples (500) pour réguler les points de sollicitation lors du fonctionnement de la turbine à vapeur.

2. Carter (300) selon la revendication 1, dans lequel l'élément ou les éléments usinables (301, 302, 303, 304, 305) sont sélectivement retirés du carter (300) par usinage en fonction du système à vanne individuelle (400) ou à vannes multiples (500) qui doit être mis en place dans la turbine à vapeur.

3. Carter (300) selon l'une quelconque des revendications précédentes, dans lequel une ou plusieurs dimensions physiques des éléments usinables (301, 302, 303, 304, 305) sont définies en fonction d'un ou de plusieurs paramètres de dynamique des fluides associés à un fluide utilisé dans la turbine à vapeur, dans lequel le ou les paramètres de dynamique des fluides figurent parmi les suivants : une pression du fluide, une vitesse du fluide, une température du fluide, un écoulement volumétrique du fluide.

4. Carter (300) selon l'une quelconque des revendications précédentes, conçu pour recevoir un écoulement entrant de fluide au moins depuis chacun de côtés opposés (300H, 300I) du carter (300), dans lequel les côtés opposés (300H, 300I) du carter (300) sont un côté supérieur gauche (300H) du carter et un côté supérieur droit (300I) du carter.

5. Carter (300) selon l'une quelconque des revendications précédentes, comprenant un élément d'écoulement entrant (307) en communication fluidique avec une ou plusieurs des chambres (C1 à C5) et conçu pour recevoir un écoulement entrant de fluide dans le carter (300).
